# EUROPEAN PATENT APPLICATION

(11) **EP 4 672 675 A1**
(43) Date of publication of application: **31.12.2025**
(21) Application number: 25186211.6
(22) Date of filing: 30.06.2025
(51) Int. Cl.: H04L 9/40

(54) **METHODS AND DEVICES FOR ENHANCING SECURITY PROTECTION FOR A NETWORK SERVICE DEVICE**

(30) Priority: 28.06.2024 US 202418758550
(71) Applicant: F5, INC., Seattle, WA 98104 (US)
(72) Inventor: CHIKKANANJAPPA, Manjunath Suggandahalli, Seattle (US); KUMAR, Vinay, Seattle (US); GUPTA, Shefali, Seattle (US); ANDRUSIER, Nelly, Seattle (US)
(74) Representative: Savi, Massimiliano

(57) **Abstract**

Methods, non-transitory computer readable media, network traffic manager apparatuses, and systems that protects a network service device are disclosed. The method includes monitor traffic data of a network service device, retrieve one or more attributes from the monitored traffic data of the network service device, and execute a security enhancing model to detect one or more security anomalies from the retrieved one or more attributes, wherein the security enhancing model is not subscribed by the network service device. In response to the one or more anomalies being detected, the method generates a notification comprising information on at least one of the one or more anomalies and the security enhancing model and transmit the notification to the network service device.

## Description

### FIELD

This disclosure relates to protect a network service device, in particular, to provide enhanced security protection for a network service device in a network traffic management system.

### BACKGROUND

As the development of various wired and wireless technologies, communication technologies are propelling the world towards a progressively interconnected and networked society. The swift expansion of mobile communications and technological advancements have render greater demand for enhanced network service capacity and connectivity. Mitigating an attack of a network service device, for example, an application server, is important to ensure network service continuity, thereby providing consistent performance to end users. Therefore, various security products are developed to provide protection mechanisms for network service devices.

A network service device can choose and subscribe one or more functions provided by a protection mechanism to enable a corresponding protection for its traffic data. However, there can be many functions provided in a protection mechanism to choose, resulting in the functions subscribed by a network service device may not be the best ones to protect its traffic data. Moreover, new functions may be added to the protection mechanism from time to time *(e.g.,* due to emerging of a new type of attack, or discovery of a vulnerability of an existing function). Some of the newly added functions could be highly relate to the traffic data of a network service device, subscriptions of which may enhance its security protection significantly. If the network service device fails to notice such newly added functions, which is common, the functions subscribed by the network service device can be outdated. Therefore, a solution is needed to facilitate a network service device to find out function(s) to enhance the security protection for it.

### SUMMARY

This disclosure is directed to methods and devices related to providing enhanced security protection for a network service device. More specifically, the methods and devices relate to protect a network service device in a network traffic management system. Relevant non-transitory computer readable medium and network traffic management system are also disclosed.

According to an aspect of the disclosure, a method for protecting a network service device is disclosed. The method may be implemented by a network traffic management system, wherein the network traffic management system may comprise one or more network traffic management apparatuses, client devices, or server devices. The method may comprise monitor traffic data of the network service device. The method may further comprise retrieve one or more attributes from the monitored traffic data of the network service device and execute a security enhancing model to detect one or more security anomalies from the retrieved one or more attributes, wherein the security enhancing model is not subscribed by the network service device. The method may further comprise in response to the one or more security anomalies being detected, generate a notification comprising information on at least one of the one or more security anomalies and the security enhancing model. The method further comprises transmit the notification to the network service device.

According to another aspect of the disclosure, an apparatus for protecting a network service device is disclosed. The apparatus may comprise memory comprising programmed instructions stored in the memory and one or more processors configured to be capable of executing the programmed instructions stored in the memory to: monitor traffic data of the network service device, retrieve one or more attributes from the monitored traffic data of the network service device, and execute a security enhancing model to detect one or more security anomalies from the retrieved one or more attributes, wherein the security enhancing model is not subscribed by the network service device. In response to the one or more security anomalies being detected, the one or more processors may further generate a notification comprising information on at least one of the one or more security anomalies and the security enhancing model. The one or more processors may further transmit the notification to the network service device.

According to another aspect of the disclosure, a non-transitory computer readable medium is disclosed. The non-transitory computer readable medium may have stored thereon instructions for protecting a network service device, comprising executable code which when executed by one or more processors, causes the one or more processors to monitor traffic data of the network service device, retrieve one or more attributes from the monitored traffic data of the network service device, and execute a security enhancing model to detect one or more security anomalies from the retrieved one or more attributes, wherein the security enhancing model is not subscribed by the network service device. The executable code may further cause the one or more processors to in response to the one or more security anomalies being detected, generate a notification comprising information on at least one of the one or more security anomalies and the security enhancing model. The executable code may further cause the one or more processors to transmit the notification to the network service device.

According to another aspect of the disclosure, a network traffic management system comprising one or more traffic management apparatuses, server devices, or client devices is disclosed. The network traffic management system may comprise memory comprising programmed instructions stored thereon and one or more processors configured to be capable of executing the stored programmed instructions to: monitor traffic data of the network service device, retrieve one or more attributes from the monitored traffic data of the network service device, and execute a security enhancing model to detect one or more security anomalies from the retrieved one or more attributes, wherein the security enhancing model is not subscribed by the network service device. In response to the one or more security anomalies being detected, the one or more processors may further generate a notification comprising information on at least one of the one or more security anomalies and the security enhancing model. The one or more processors may further transmit the notification to the network service device.

With implementations of the above and operations that will be discussed below, traffic data of a network service device may be obtained and analyzed. Accordingly, potential gap(s) in existing protection solution for the network service device may be detected and related security enhancing model(s) to improve the protection solution may be included in a notification to the network service device. Therefore, a more robust protection solution may be provided for the network service device.

The above and other aspects and their implementations are described in greater detail in the drawings, the descriptions, and the claims below.

### BRIEF DESCRIPTION OF THE DRAWINGS

The foregoing and other aspects of the present disclosure are best understood from the following detailed description when read in connection with the accompanying drawings. For the purpose of illustrating this technology, specific examples are shown in the drawings, it being understood, however, that the examples of this technology are not limited to the specific instrumentalities disclosed. Included in the drawings are the following Figures:
FIG. 1 illustrates an exemplary network traffic management system;
FIG. 2 illustrates an exemplary execution environment of a network traffic management apparatus;
FIG. 3 illustrates an exemplary block diagram of a network traffic management apparatus;
FIG. 4 illustrates a flow diagram of an exemplary method for protecting a network service device being executed at a network traffic management apparatus;
FIG. 5 illustrates an exemplary configuration flow diagram for executing an enhanced security protection for a network service device; and
FIG. 6 illustrates an exemplary notification for a network service device.

### DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that examples of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

A network traffic management system may relate to a set of tools, processes, devices, and relevant technologies to control and optimize data flow within a computer network. Such network traffic management system may monitor, analyze, control and balance network traffic to maintain the performance and reliability of a computer network. A network traffic management system may be implemented in various network topologies. Devices utilized and topologies designed in a network environment may depend on specific requirements and a scale of a network. Factors may include such as the size of the network, its geographic spread, the types of applications and services being offered, the organization's traffic management requirements, etc. For example, the network traffic management system may be implemented in a centralized, distributed, or cloud-based topology in various networks. The network traffic management system may be executed in various networks, include but not limited to, Local Area Networks (LAN), Wide Area Networks (WAN), Metropolitan Area Network (MAN), data center networks, cloud networks, hybrid networks, or any appropriate existing networks or the ones that may be developed in the future. Various devices may be involved in the network traffic management system, depending on the specific network and topology being used. For example, edge routers or switches, firewalls, proxies, load balancers, Content Delivery Network (CDN) servers, application servers, etc. may be included in a network traffic management system.

A network traffic management apparatus may refer to an apparatus executing one or more operations as will be described below to protect a network service device according to various examples of this disclosure. The network traffic management apparatus may obtain traffic data of a network service device, and thereby analyze the traffic for the network service device to enhance a security protection solution for the network service device by implementing the one or more operations described in this disclosure. Such network traffic management apparatus may reside at the network service device, or at any other devices that appropriate to implement the operation(s) in this disclosure.

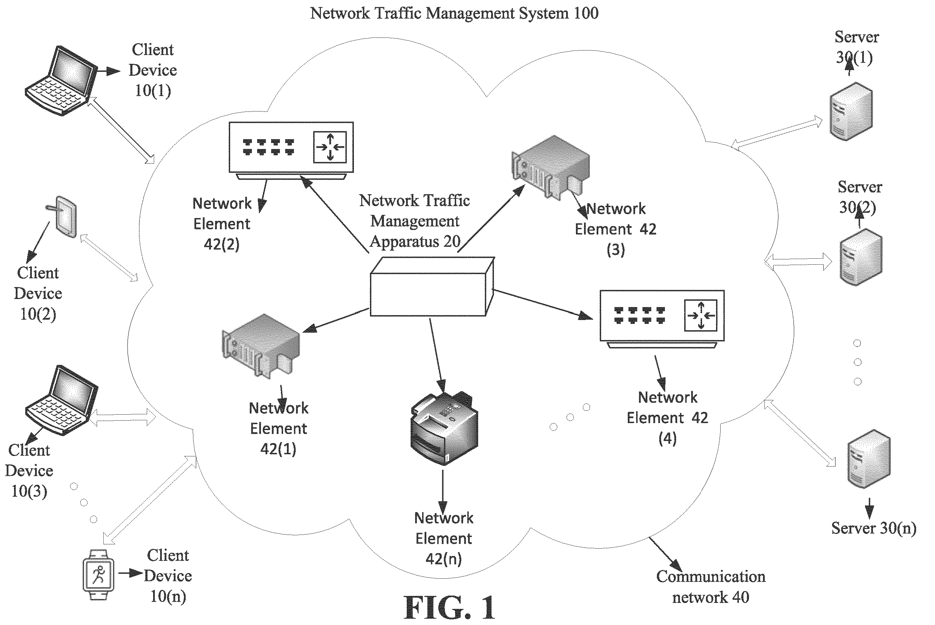

A network service device may be any network device that provides a service to a client device, which is designated as an end point to be protected by the network traffic management apparatus. The network service device may be implemented in various ways, such as hardware, software, firmware, or any combination thereof. For example, the network service device to be protected may be a server of the network traffic management system (e.g., a web application server, such as a one of the servers 30(1)-30(n) illustrated in FIG. 1 which will be described in the following), or a virtual machine, virtual server, engine, instance or the like that resides at a server or other network elements.

A client device, from where traffic to a network service device that being protected by the network traffic management apparatus in this disclosure, may refer to any client device that may send or initiate a request to the network service device to establish or continue to a communicative connection with the network service device. Similar as the network service device, the client device may be implemented in various ways, including but not limited to, hardware, software, firmware, or any combination thereof. As an example, the client device may be a client device of a network traffic management system discussed below. As another example, the client device may also be any applications, engines, or instances that running on the client device, such as a web browser.

FIG. 1 illustrates an exemplary simplified network traffic management system 100 according to an example of this disclosure. As illustrated in FIG. 1, the network traffic management system 100 may comprise a plurality of client devices 10(1)-10(n), a communication network 40, and a plurality of servers 30(1)-30(n) serving the client devices 10(1)-10(n). The client devices 10(1)-10(n) and servers 30(1)-30(n) may communicatively connect with each other via the communication network 40.

Referring to FIG. 1, as an exemplary implementation of the client device discussed above, the one of the client devices 10(1)-10(n) may send a request to one of the servers 30(1)-30(n) for a service (e.g., via a web browser installed at the one of the client devices 10(1)-10(n)). The client devices 10(1)-10(n) may also be referred to as a "client," "user equipment," or "user equipment device," which may include but is not limited to a mobile phone, smartphone, tablet, laptop computer, a smart electronics, a wearable device, a video surveillance device, an industrial wireless sensors, or an appliance including an air conditioner, a television, a refrigerator, an oven and the like, or other devices that are capable of communicating wirelessly over a network. Moreover, the client devices 10(1)-10(n) may also be a proxy or a server or any network elements or devices, which may send above discussed request to the one of the servers 30(1)-30(n) on behalf of a user equipment. For example, one of the client devices 10(1)-(n) may be a proxy (*e.g.,* a forward proxy) of a private network, which forwards a request message that it received from a client device isolated within the private network. In this way, the proxy sends a request message on behalf of the isolated device and allows it to be served by the one of the servers 30(1)-30(n). In this scenario, the proxy plays the role of the one of the client devices 10(1)-10(n) in the network traffic management system 100 as illustrated in FIG. 1.

Continuing to refer to FIG. 1, as an exemplary implementation of the network service device discussed above, the one of the servers 30(1)-30(n) may respond to the one of the client devices 10(1)-10(n) and have one or more interactions with the one of the client devices 10(1)-10(n) to provide the requested service or data, in response to receiving the one of the client devices 10(1)-10(n)'s request via the communication network 40. The servers 30(1)-(n) may be any types of servers to serve a client device. For example, the servers 30(1)-(n) may be application servers that run applications, manage, and execute various tasks related to the processing of client device's requests within the network environment. Various services may be provided by the servers 30(1)-30(n).

As illustrated in FIG. 1, the communication network 40 may comprise a plurality of network elements 42(1)-42(n) to provide connectivity and data transmission. Depending on the topology and features of the communication network 40, there may be various types of network elements 42(1)-42(n) (*e.g.,* a router, a proxy, a load balancer, etc.) to perform designated functionalities. As illustrated in FIG. 1, the one of the client devices 10(1)-10(n) may communicatively connected to the communication network 40. When the one of the client devices 10(1)-10(n) sends a message to request a service provided by one of the servers 30(1)-30(n), the message may go through some of the network elements 42(1)-42(n) before reaching its destination. It is to be understood that different network technologies may be applied by the communication network 40. For example, communication network 40 may be one or more wired or wireless public or private networks, based on any industry-standard protocols, such as Ethernet, Wi-Fi, Satellite Networks, 4G/LTE (Long-Term Evolution), 5G, and various internet protocols like TCP/IP. The communication network 40 may also be formed by connecting appropriate number of networks together as needed.

In the network environment illustrated in FIG. 1, to protect the one of the servers 30(1)-30(n) from an attack or for purpose of anti-fraud (*e.g*., anti-bot), some protection mechanisms may be designed to execute on the one of the servers 30(1)-30(n) itself or some device(s) that communicatively connected to the one of the servers 30(1)-30(n) (*e.g.,* an intermediate device sitting between client devices 10(1)-10(n) and the servers 30(1)-30(n), such as a router, a load balancer, etc.). When executing, the protection mechanisms may intercept suspicious traffic and drop the data as needed to protect the one of the servers 30(1)-30(n) and avoid potential attack(s) to the one of the servers 30(1)-30(n). To fulfill this task, theoretically such protection mechanisms are desired to be updated along with the emerging of new attacks and any discovered potential vulnerabilities of the protection mechanisms (*e.g.,* logical gaps). In most cases, protection mechanisms of security products are developed and maintained by different entities from the service provider(s) or product developer(s) of the one of the servers 30(1)-30(n). Therefore, in practical execution environments, what protection mechanism(s) to utilize, which specific function(s) of a protection mechanism to subscribe and thus implemented to protect the server is decided by an administrating entity of the one of the servers 30(1)-30(n) (*e.g.,* an application service provider). However, with the fast pace of development of supplemental or new security functions of a protection mechanism, it is typical that a plurality of new security functions is continuously delivered to an administrator of the one of the servers 30(1)-30(n). The administrator may get a chance to explore some of the new security functions, for examples, the new functions embedded in an update push. But due to lacking sufficient knowledge of the functionalities and characteristics of those updates and may be also the characteristics of the server's own traffic data, most of the newly added or enhanced security functions and their capabilities go unnoticed by the administrator. Accordingly, failing to be aware of all the security functions provided in a protection mechanism results in an incomplete utilization of the protection mechanism for the one of the servers 30(1)-30(n). As another example, a protection mechanism may be newly subscribed by the one of the servers 30(1)-30(n). Therefore, the administrating entity of the one of the servers 30(1)-30(n) may not be familiar with all the security functions provided by the protection mechanism or has only subscribed some of the security functions. Then it is possible that some functions that are not subscribed by the one of the servers 30(1)-30(n) have a better match with the traffic pattern of the server. In such a situation, the one of the servers 30(1)-30(n) is missing security functions which are available and provided in the protection mechanism but are not currently subscribed. Therefore, the protection mechanism selected or subscribed for the one of the servers 30(1)-30(n) may be inadequate or outdated over time, resulting in an inadequate amount of overall protection for the one of the servers 30(1)-30(n).

Referring to FIG. 1, by implementing the network traffic management apparatus 20 described in this disclosure at the network service device or any appropriate device that communicatively connected thereto (*e.g*., reside at an intermediate device such as a router or a load balancer between the one of the client devices 10(1)-10(n) and the one of the servers 30(1)-30(n)), the undesired scenarios described above may be alleviated at least to a certain extent. Such a network traffic management 20 may be executed to implement one or more operations which will be discussed below, to protect a network service device which is an endpoint providing certain service(s) or data to various client devices.

It is to be understood that FIG. 1 illustrates an exemplary simplified network traffic management system 100 to which many variations may be made. For example, other types and numbers of systems, devices, components, and elements in other topologies may be used to add into the illustrated system or replace any part of the illustrated system. Furthermore, one or more of the components depicted in the network traffic management system 100, such as the network traffic management apparatus 20, may be configured to operate as virtual instances on the same or different physical machine(s). In some scenarios, the network traffic management apparatus 20 may operate as more than one separate devices at different physical devices, and communicatively connected with each other through communication network 40 or other relevant network(s) as needed, rather than operate on the same physical device as illustrated in FIG. 1.

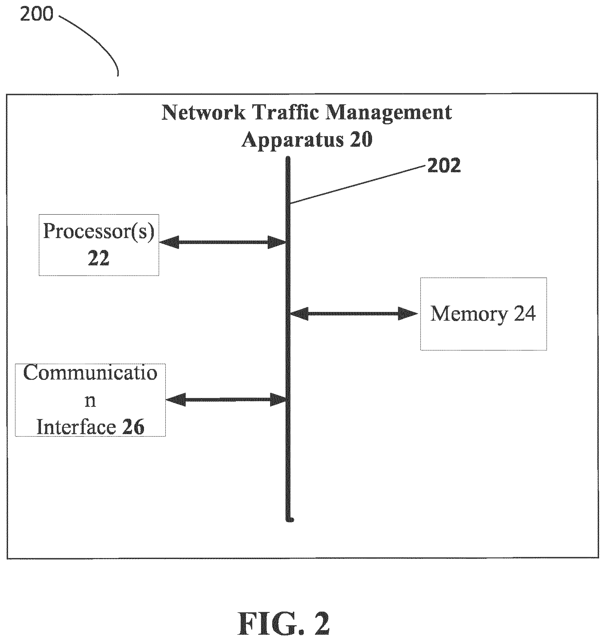

FIG. 2 shows an exemplary execution environment 200 of the network traffic management apparatus 20. In the execution environment 200, the network traffic management apparatus 20 may include processor(s) 22, a memory 24, a communication interface 26 and/or other circuitries, which are coupled together by a bus 202 or other communication link. It is to be understood that the network traffic management apparatus 20 may include other types and/or numbers of elements in other configurations. The processor(s) 22 of the network traffic management apparatus 20 may execute programmed instructions stored in the memory 24 of the network traffic management apparatus 20 for any number of the operations or tasks identified in this disclosure. The processor(s) 22 of the network traffic management apparatus 20 may include one or more central processing units (CPU) or general-purpose processors with one or more processing cores, for example, although other types of processor(s) can also be used. The communication interfaces 26, which may support wireless, e.g., Bluetooth, Wi-Fi, WLAN, cellular (4G, LTE/A, 5G), and/or wired, Ethernet, Gigabit Ethernet, optical networking protocols. The communication interfaces 26 may also include serial interfaces, such as universal serial bus (USB), serial ATA, IEEE 1394, lighting port, I2C, slimBus, or other serial interfaces. In some examples, the execution environment 200 may further include power functions and various input interfaces (not shown in FIG. 2). In some examples, the execution environment 200 may further include a user interface that may include human-to-machine interface devices and/or graphical user interfaces (GUI).

The memory 24 of the network traffic management apparatus 20 may store these programmed non-transitory computer-readable instructions for one or more aspects of the technology as described and illustrated herein, although some or all of the programmed instructions could be stored elsewhere. A variety of different types of memory storage devices, such as random access memory (RAM), read only memory (ROM), Hard Disk Drive (HDD), solid state drives, flash memory, Erasable Programmable Read Only Memory (EPROM), or other computer readable medium such as magnetic or optical disc (e.g., Compact Disc Read Only Memory (CD-ROM)) which is read from and written to by a magnetic, optical, or other machine-readable medium that is coupled to the processor(s) 22, may be used as the memory 24. Accordingly, the memory 24 of the network traffic management apparatus 20 may store application(s) that can include computer executable instructions that, when executed by the network traffic management apparatus 20, cause the network traffic management apparatus 20 to perform actions or operations, such as to transmit, receive, or otherwise process messages, for example, and to perform other actions or operations described and illustrated below with reference to the drawings. An application may be implemented as a unit, module, component, instance, or engine of other applications and/or operating system extensions, plugins, or the like. The application(s) can be executed within or as virtual machine(s) or virtual server(s) that may be managed in a cloud-based computing environment, without being tied to one or more specific physical network devices.

The methods, devices, processing, circuitry, and logic described below may be implemented in many different ways and in many different combinations of hardware, software, firmware, or combination thereof. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium (e.g., memory 24) that is other than a transitory signal. A product, such as a computer program product, may include a storage medium and instructions stored in or on the medium, and the instructions when executed by the circuitry in a device may cause the device to implement any of the processing described above or illustrated in the drawings.

The implementations discussed herein may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

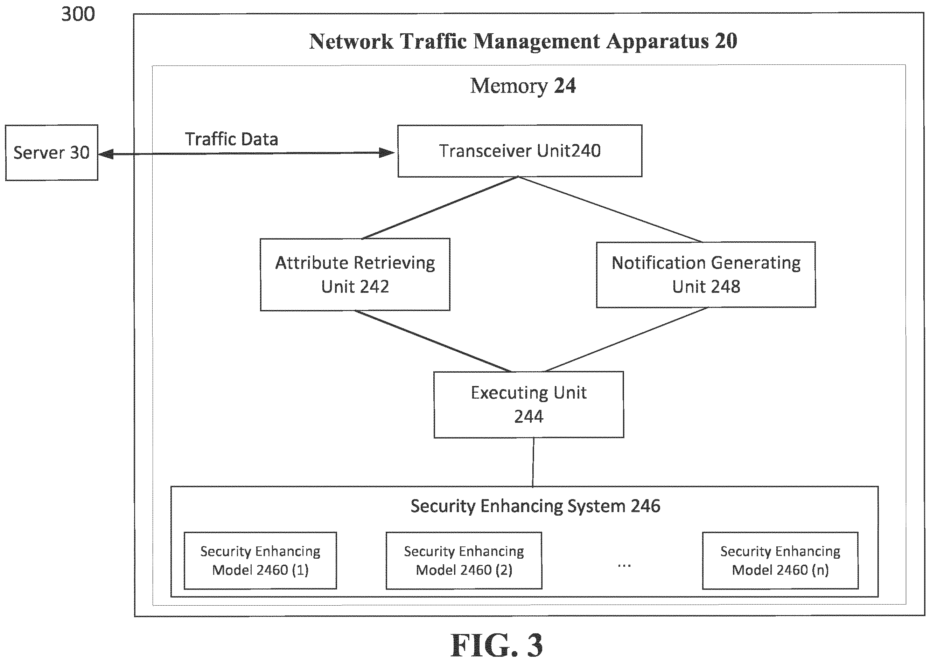

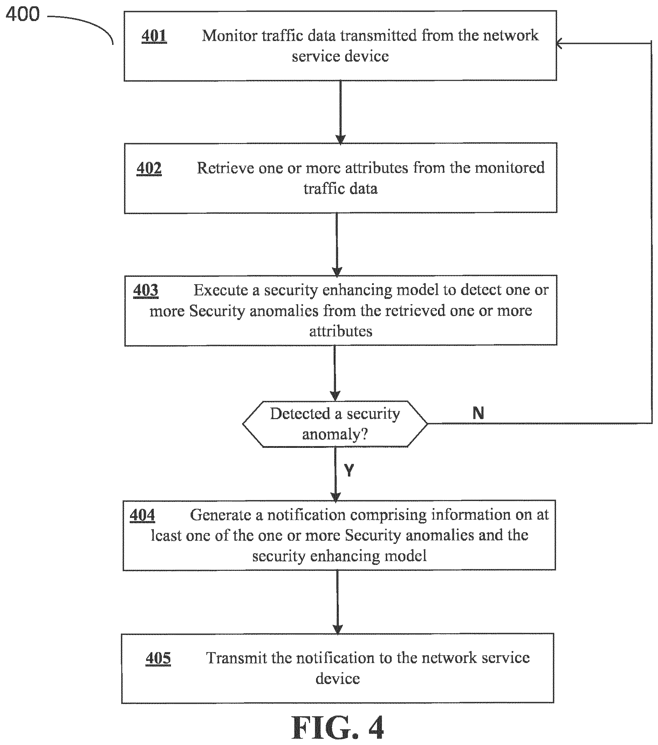

Referring to FIG. 3, an exemplary block diagram of the network traffic management apparatus 20 to protect a network service device is illustrated. In FIG. 3, the network traffic management apparatus 20 may comprise Transceiver Unit 240, Attribute Retrieving Unit 242, Executing Unit 244, Security Enhancing System 246 comprising a plurality of Security Enhancing Models 2460(1)- 2460(n), and Notification Generating Unit 248. Operations performed by those units and the Security Enhancing System 246 will be described in conjunction with the flow diagram illustrated in FIG. 4. Those units described herein may be implemented with various available or appropriate programing APIs, such as JavaScript, Python, etc.

The term "unit" (and other similar terms such as module, submodule, etc.) may refer to computing software, firmware, hardware, and/or various combinations thereof. At a minimum, however, units are not to be interpreted as software that is not implemented on hardware, firmware, or recorded on a non-transitory processor readable recordable storage medium. Indeed, "unit" is to be interpreted to include at least some physical, non-transitory hardware such as a part of a processor, circuitry, or computer. Two different units may share the same physical hardware (e.g., two different units can use the same processor and network interface). The units described herein can be combined, integrated, separated, and/or duplicated to support various applications. Also, a function described herein as being performed at a particular unit can be performed at one or more other units and/or by one or more other devices instead of or in addition to the function performed at the particular unit. Further, the units can be implemented across multiple devices and/or other components local or remote to one another. Additionally, the units can be moved from one device and added to another device, and/or can be included in both devices. The units can be implemented in software stored in memory or non-transitory computer-readable medium. The software stored in the memory or medium can run on a processor or circuitry (e.g., ASIC, PLA, DSP, FPGA, or any other integrated circuit) capable of executing computer instructions or computer code. The units can also be implemented in hardware using processors or circuitry on the same or different integrated circuit.

FIG. 4 illustrates a flow diagram of an exemplary process 400 for protecting a network service device implemented or executed by the network traffic management apparatus 20. As discussed above, the network traffic management apparatus 20 or a part of it may reside at and implement on any appropriate device(s), which is involved in a communicative connection being established between a client device and the protected network service device (*e.g.,* an intermediate device sitting between client devices 10(1)-10(n) and the servers 30(1)-30(n), such as a router, a load balancer, Container Egress Traffic (CES) close to the servers 30(1)-30(n), etc.), or on a device communicatively connected thereto, which is suitable for performing one or more relevant actions or operations described below. In the following, steps illustrated in FIG. 4 will be described in conjunction with the logic of the network traffic management apparatus 20 shown in FIG. 3.

At step 401, the Transceiver Unit 240 of the network traffic management apparatus 20 may monitor traffic data of one of the servers 30(1)-30(n). The one of the servers 30(1)-30(n) may be a network service device that newly implement a protection mechanism (*e.g*., a new user of a security product providing various protection mechanisms). The network traffic management apparatus 20 may be executed for such one of the servers 30(1)-30(n), after the one of the servers 30(1)-30(n) become an active device of the protection mechanism it subscribes to (*e.g.,* after subscribing a function and being protected by the subscribed function). In some examples, the one of the servers 30(1)-30(n) may also have implemented the security mechanism (*e.g.,* an existing user of the security product providing various protection mechanisms) but may need or is interested in new or additional security functions or functionalities provided in the security solution. Accordingly, the network traffic management apparatus 20 may be implemented for one of the servers 30(1)-30(n) to provide a possibility to expand the functions that the one of the servers 30(1)-309n) subscribes to. For the latter situation, the network traffic management apparatus 20 may implement operations discussed in this disclosure for any new or updated function(s). Therefore, the network traffic management apparatus 20 may be executed for such one of the servers 30(1)-30(n)after one or more new function(s) being available. In some examples, the network traffic management apparatus 20 may be executed for the one of the servers 30(1)-30(n) for a predetermined time period (e.g., 24 hours, 48 hours, etc.). It is to be understood that not only traffic transmitted from the one of the client devices 10(1)-10(n) to one of the servers 30(1)-30(n), but also traffic transmitted from one of the servers 30(1)-30(n) to one of the client devices 10(1)-10(n) may be monitored as needed.

At step 402, the Attribute Retrieving Unit 242 of the network traffic management apparatus 20 may retrieve one or more attributes from the monitored traffic data of the one of the servers 30(1)-30(n). The attribute(s) retrieved herein may be used to identify an attack from the monitored traffic data. Herein, various appropriate tools may be utilized to perform this operation. As a non-limiting example, a unified and open analytics platform Databricks may be used to analyze the monitored traffic transmitted from the one of the client devices 10(1)-10(n) to one of the servers 30(1)-30(n).

At step 403, the Executing Unit 244 of the network traffic management apparatus 20 may execute Security Enhancing Model(s) 2460(1)-2460(n) of Security Enhancing System 246, to detect one or more security anomalies from the retrieved one or more attributes. Referring to FIG. 3, the Security Enhancing System 246 may comprise a plurality of Security Enhancing Models 2460(1)- 2460(n). A security function may be implemented as one or a plurality of Security Enhancing Models 2460(1)- 2460(n). The Security Enhancing Models 2460(1)- 2460(n) are machine learning based models which have been trained with data representing a type of attack. The training data may have a plurality of vectors and features to represent or characterize a potential attack or malicious behavior. Each of the Security Enhancing Models 2460(1)-2460(n) may relate to a particular type of an attack, or a part of a particular type of an attack. As an example, one of the Security Enhancing Models 2460(1)-2460(n) or a group of several Security Enhancing Models 2460(1)-2460(n) may be used for malicious user mitigation and therefore may detect malicious user. In this scenario, one or more of the Security Enhancing Model(s) 2460(1)-2460(n) may be trained with training data representing a plurality of data packets having different bola score, GMM model score, or non-existing URL score. Then when the one or more of the Security Enhancing Model(s) 2460(1)-2460(n) being executed and input with a data packet, a cumulative score of the input data packet may be calculated by the one or more of the Security Enhancing Model(s) 2460(1)-2460(n). Alternatively, one or more of the Security Enhancing Model(s) 2460(1)-2460(n) may be trained how to calculate the bola score, GMM model score, or non-existing URL score for a data packet, and may calculate the cumulative score for an input data packet. Then if the cumulative score is higher than a predetermined threshold value, an alert of an attack may be output by the Security Enhancing Model(s) 2460(1)-2460(n).

As a non-limiting example, if the Security Enhancing Model is a model to detect a non-existing URL, it may analyze how many requests (*e.g.,* any API calls) are transmitted from the one of the client devices 10(1)-10(n) to the one of the servers 30(1)-30(n) (e.g., an application of one of the servers 30(1)-30(n)) are non-existing requests. In this scenario, among others, one attribute may be a response code, and a vector may be created on this basis. In some examples, a tool for word embedding (e.g., Word2vec) may be utilized to create a distributed representation of words into numerical vectors, converting text into vectors that capture semantics and relationships among words (*e.g*., by use relevant libraries). Also, various tools may be used (e.g., Scikit-Learn which is a python library) to implement machine learning models and statistical modelling. With Scikit-Learn, various machine learning models may be implemented for regression, classification, clustering. In some examples, a distributed search and analytics engine (e.g., Elastic search) may be utilized to read traffic data into the Security Enhancing Models 2460(1)-2460(n). Therefore, the Security Enhancing Models 2460(1)-2460(n) may be executed to analyze the attributes retrieved from the monitored traffic data, detect and figure out attacks and suspicious traffic data (*e.g*., DDoS attack, malicious user activity, etc.).

In some examples, to figure out one or more hidden or unnoticed functions for one of the servers 30(1)-(n), the network traffic management apparatus 20 may refer to potential interests and needs of one of the servers 30(1)-(n) to decide which Security Enhancing Model(s) 2460(1)-2460(n) to execute for the retrieved attribute(s). Herein, one of the servers 30(10-30(n) may indicate character(s) and patterns of its traffic (e.g., via a configuration interface or portal), its preferences, or the like in advance. Then to figure out the hidden or unnoticed function(s) which may enhance the protection of the one of the servers 30(1)-(n), the Executing Unit 244 executes only the Security Enhancing Model(s) 2460(1)-2460(n) that not subscribed by the one of the servers 30(1)-(n).

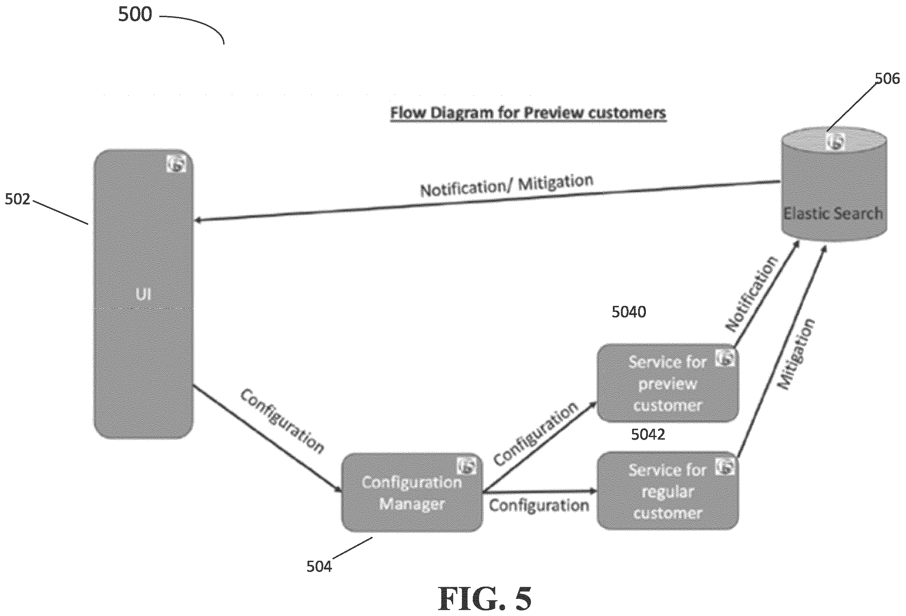

In some examples, as illustrated in FIG. 5, when executing one of the Security Enhancing Model(s) 2460(1)-2460(n), traffic data from one or more server(s) 30(1)-(n) that subscribe this function (referred to as subscribed server hereinafter) can be differentiated from one or more server(s) 30(1)-(n) that not subscribe this function (referred to as non-subscribed server hereinafter). Therefore, the traffic data may be handled along different paths.

In an exemplary scenario illustrated in FIG. 5, after an internal configuration via a user interface 502 within the system, traffic monitored and therefore obtained from subscribed server(s) and unsubscribed server(s) are directed to separate paths by configuration manager 504. As shown in FIG. 5, traffic data of subscribed server(s) is directed to Service for regular customer path 5042, and traffic data of unsubscribed server(s) is directed to Service for regular customer path 5040. It is to be understood that implementing operations discussed herein for monitored traffic data may consume system resource and therefore cause latency. Accordingly, designing such parallel paths to process traffic data may avoid potential impacts on processing and protection for subscribed server(s). In some examples, the processing of traffic data of path 5040 may be performed in a new dedicated cluster. On the path 5042, analysis may be made, and attack mitigation may be conducted for subscribed server(s). On path 5040, similarly, analysis may be made, and notification for security anomalies detected from the traffic data may be generated, which will be described in the following. Then the notification may be transmitted to UI 502 via Elastic search 506.

At step 404, in response to the one or more security anomalies being detected, the Notification Generating Unit 248 of the network traffic management apparatus 20 may generate a notification. Herein, the notification may comprise information on at least one of the one or more security anomalies. A security anomaly may be a particular type of attack, or detected malicious activities (*e.g.,* a particular malicious behavior conducted by a particular user), or any other relevant information indicating an anomaly detected from the traffic data from one of the servers 30(1)-30(n). For example, the one or more security anomalies may relate to any type of attack that the Security Enhancing Models 2460(1)-2460(n) are designed to detect and mitigated for, such as signature attack, DDoS attack, malicious user mitigation or the like. Moreover, the notification may also comprise information on one or more of the Security Enhancing Model(s) 2460(1)-2460(n) which detected the one or more security anomalies included in the notification. In this way, the notification may alert any of the detected anomalies, and related Security Enhancing Model(s) 2460(1)-2460(n) to one of the servers 30(1)-(n).

As discussed above, instead of introducing each of the Security Enhancing Models 2460(1)-2460(n) the protection solution provides, the notification may focus on those unsubscribed Security Enhancing Model(s) 2460(1)-2460(n) from which the one of the servers 30(1)-30(n) may benefit from if subscribe them. In some further examples, the notification may only identify or include information on a predetermined number of security anomalies. Therefore, by ranking or prioritizing, only certain number rather than all the detected security anomalies are included in the notification, such as top five or top three security anomalies with the highest risk score. In some further examples, the Notification Generating Unit 248 may only include a security anomaly if its security risk is above an upper threshold. In some further examples, the Notification Generating Unit 248 may remove a security anomaly if its security risk is below a lower threshold. Herein, the ranking or prioritizing may sort out the most important Security Enhancing Model(s) 2460(1)-2460(n) that not subscribed by the one of the servers 30(1)-30(n), but one of the servers 30(1)-30(n) would benefit from subscribing any of those Security Enhancing Model(s) 2460(1)-2460(n). Accordingly, the notification may be more user friendly. Therefore, as an example, the Notification Generating Unit 248 may include information identifying a predetermined number of security anomalies with a security risk above an upper threshold from the one or more detected security anomalies. In this way, the notification may alert one of the servers 30(1)-30(n) that unsubscribed but relevant Security Enhancing Model(s) 2460(1)-2460(n) may be subscribed and thereby enabled for mitigating those detected security anomalies for its traffic data.

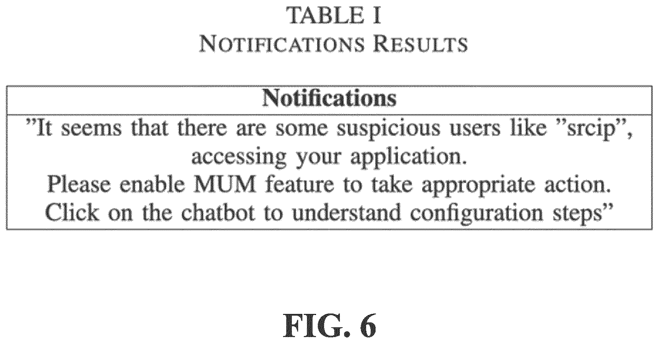

At step 405, the Transceiver Unit 240 of the network traffic management apparatus 20 may transmit the notification generated by the Notification Generating Unit 248 to the one of the servers 30(1)-30(n). For example, as illustrated in FIG. 6, an exemplary notification may be "It seems that there are some suspicious users like 'srcip', accessing your application. Please enable Malicious User Mitigation feature to take appropriate action. Click on the chatbot to understand configuration steps."

In some examples, upon receiving such notification, one of the servers 30(1)-30(n) may be directed to or may access a preview mode via a portal. It is a preview mode because the one of the servers 30(1)-(n) has not subscribe the relevant one or more Security Enhancing Model(s) 2460(1)-2460(n) yet, therefore a corresponding function has not been enabled for the one of the servers 30(1)-(n). Then one of the servers 30(1)-30(n) may review details of analysis of its traffic data, those security anomalies detected, actual impact on its traffic data and its executed application(s), or any combination thereof. Accordingly, the one of the servers 30(1)-30(n) may decide whether to subscribe any of the related one or more Security Enhancing Models 2460(1)-2460(n) to mitigate those detected security anomalies. If the server has any question or concern, it may send a query to the network traffic management apparatus 20. The network traffic management apparatus 20 in turn may generate a reply for the one of the servers 30(1)-30(n). For example, the reply may comprise more detailed security analysis conducted by the network traffic management apparatus 20 on the traffic data of one of the servers 30(1)-30(n), description of one or more functions of the one or more corresponding Security Enhancing Models 2460(1)-2460(n), a recommendation of one or more configurations of the one or more Security Enhancing Models 2460(1)-2460(n), or any combination thereof. In this case, the network traffic management apparatus 20 may employ an interactive component (*e.g*., a chat tool) to guide the one of the servers 30(1)-30(n) to explore functions provided by related one or more Security Enhancing Models 2460(1)-2460(n). Such interactive chat tool may analyze the notification generated based on the traffic data and guide the one of the servers 30(1)-30(n) as for how to enable the one or more Security Enhancing Models 2460(1)-2460(n), how to configure each of the Security Enhancing Models 2460(1)-2460(n), or the like.

With implementations of all or part of the above discussed operations for protecting a network service device by a network traffic management apparatus, the apparatus may assist a network service device mitigating potential malicious traffic by analyzing actual traffic data of the network service device. Specifically, by monitoring and analyzing traffic data of the network service device with security enhancing models not subscribed by the network service device, function(s) provided by one or more security enhancing models that can mitigate one or more security anomaly detected from the traffic data may be found. Accordingly, a security gap can be figured out for the network service device. Accordingly, the administrating entity of the network service device may have a chance to learn most relevant security functions that has not subscribed yet. Therefore, the administrating entity may be kept updated with the latest security functions provided within one or more protection mechanisms, especially the ones closely relate to the actual needs of its traffic pattern or characteristic. In this way, by subscribing and enabling related security enhancing models provided in the one or more protection mechanisms, potential attacks in the traffic data of the network service device may be mitigated. Moreover, such operations may be executed for newly onboarded network service device. Also, they may be executed for existing network service device(s) when new security enhancing models are added within one or more protection mechanisms. With a notification indicating detected security anomalies, the network service device may have an updated knowledge of its traffic data, its pattern, its character, and its needs. In this way, the network service device has an opportunity to know security gap(s) in its traffic data, and potential available functions provided by one or more security enhancing models that relates to and can enhances a security protection for its own traffic data. With an analysis on one or more detected security anomalies from its real traffic data and available functions to improve its protection, the network service device can have a full explore of related functions within the latest one or more protection mechanisms (*e.g.,* through an interactive chat tool). Therefore, functions subscribed by a network service device may be updated from time to time, in line with the latest functions provided in one or more protection mechanisms (e.g., protection mechanisms in a security product that the network service device uses).. In this way, the protection for the network service device may be enhanced by revealing the unknown or hidden functions within the protection mechanism. Therefore, application(s) running on the network service device and service(s) provided thereof may be secured in a more robust way after analyzing the traffic data transmitted between those applications and client devices.

Throughout the specification and claims, terms may have nuanced meanings suggested or implied in context beyond an explicitly stated meaning. It will be further understood that: the term "or" may be inclusive or exclusive unless expressly stated otherwise; the term "set" may comprise zero, one, or two or more elements; the terms "some", "another," and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an example is included in at least one example of the present solution. Thus, discussions of the features and advantages, and similar language, throughout the specification may, but do not necessarily, refer to the same example.

Furthermore, the described features, advantages and characteristics of the present solution may be combined in any suitable manner in one or more implementations or examples. One of ordinary skill in the relevant art will recognize, in light of the description herein, that the present solution can be practiced without one or more of the specific features or advantages of a particular implementation or example. In other instances, additional features and advantages may be recognized in certain implementations or examples that may not be present in all implementations of the present disclosure.

## Claims

1. A method for protecting a network service device, the method implemented by a network traffic management system comprising one or more network traffic management apparatuses, client devices, or server devices, the method comprising:
monitoring traffic data of the network service device;
retrieving one or more attributes from the monitored traffic data of the network service device;
executing a security enhancing model to detect one or more security anomalies from the retrieved one or more attributes, wherein the security enhancing model is not subscribed by the network service device;
in response to the one or more security anomalies being detected, generating a notification comprising information on at least one of the one or more security anomalies and the security enhancing model; and
transmitting the notification to the network service device.

2. The method of claim 1, wherein the method further comprising:
receiving a query associated with the corresponding security enhancing model from the network service device;
generating a reply comprising a recommendation of one or more configurations of the security enhancing model; and
transmitting the reply to the network service device.

3. The method of claim 1, wherein the security enhancing model is a machine learning based model trained with data representing a type of attack, and generating the notification comprising information on at least one of the one or more security anomalies and the security enhancing model comprising:
identifying a predetermined number of security anomalies with a security risk above an upper threshold from the one or more security anomalies; and
generating the notification comprising information on the predetermined number of security anomalies.

4. The method of claim 1, wherein the obtaining the traffic data transmitted from the network service device further comprises:
obtaining the traffic data transmitted from the network service device for a predetermined period of time after the network service device being active in the network traffic management system.

5. The method of claim 1, wherein the obtaining the traffic data transmitted from the network service device further comprises:
obtaining the traffic data transmitted from the network service device for a predetermined period of time after the security enhancing model being active in the network traffic management system.

6. An apparatus for protecting a network service device, comprising memory comprising programmed instructions stored in the memory and one or more processors configured to be capable of executing the programmed instructions stored in the memory to carry out the method according to any one of the claims from 1 to 5.

7. A non-transitory computer readable medium having stored thereon instructions for protecting a network service device, comprising executable code which when executed by one or more processors, causes the one or more processors to carry out the method according to any one of the claims from 1 to 5.

8. A network traffic management system, comprising one or more traffic management apparatuses, server devices, or client devices, the network traffic management system comprising memory comprising programmed instructions stored thereon and one or more processors configured to be capable of executing the stored programmed instructions to carry out the method according to any one of the claims from 1 to 5.
